# FASCICULE DE BREVET EUROPEEN

(11) **EP 0 522 925 B1**
(45) Date de publication et mention de la délivrance du brevet: **30.08.1995**
(21) Numéro de dépôt: 92401852.6
(22) Date de dépôt: 30.06.1992
(51) Int. Cl.: G01B 11/10

(54) **Dispositif de messure du diamètre d'une cigarette**
Vorrichtung zum Messen des Durchmessers einer Zigarette
Apparatus for measuring the diameter of a cigarette

(30) Priorité: 04.07.1991 FR 9108357
(43) Date de publication de la demande: 13.01.1993
(73) Titulaire: SOCIETE NATIONALE D'EXPLOITATION INDUSTRIELLE DES TABACS ET ALLUMETTES, 75340 Paris Cedex 07 (FR)
(72) Inventeur: Cholet, Georges, F-45000 Orleans (FR)
(74) Mandataire: de Saint-Palais, Arnaud Marie

(56) Documents cités:
- GB-A- 2 039 034
- GB-A- 2 072 840
- GB-A- 2 162 941
- US-A- 4 007 992
- US-A- 4 332 475
- PATENT ABSTRACTS OF JAPAN vol. 10, no. 188 (P-473)(2244) 3 Juillet 1986 & JP-A-61034407
- PATENT ABSTRACTS OF JAPAN vol. 6, no. 265 (P-165) 24 Décembre 1982 & JP-A-57161607

## Description

L'invention concerne des perfectionnements aux procédés décrits dans les brevets français No 2 636 731 et 2 646 904 déposés par la Demanderesse, respectivement le 16 septembre 1988 et le 9 mai 1989.

Ces procédés comportent le balayage à vitesse constante du plan de la section transversale d'un objet cylindrique dont on veut mesurer le diamètre par un faisceau laser qui se déplace en restant parallèle à une direction prédéterminée et la mesure du temps d'interception dudit faisceau par l'objet.

Dans l'application de ces procédés à la mesure du diamètre d'une cigarette, le calibrage exige habituellement que la mesure soit effectuée dans une pluralité de directions de la section transversale, la cigarette étant à cet effet entrainée en rotation autour de son axe, et la valeur moyenne de son diamètre étant calculée.

Le second brevet susvisé prévoit en outre d'effectuer une translation de la cigarette parallèlement à son axe, afin de mesurer son diamètre dans une pluralité de sections transversales et ainsi, tenir compte de variations axiales éventuelles, dues par exemple à la présence d'une particule de papier arrachée qui se trouve en saillie par rapport au corps de la cigarette.

En principe, il résulte de la présence d'une telle saillie que le diamètre mesuré se trouve augmenté.

La Demanderesse a constaté que, dans certains cas, qui correspondent en pratique à la présence de "peluches" (défauts inhérents à la structure même du papier qui enveloppe le tabac), le diamètre moyen mesuré dans une section transversale est au contraire inférieur à la valeur réelle, l'erreur pouvant atteindre 10 %.

Pour supprimer cet inconvénient, le brevet US 4 007 992 a prévu d'utiliser une lentille cylindrique pour allonger la forme du faisceau lumineux dans une direction perpendiculaire à la direction de balayage. Cependant, il s'avère que cette solution ne permet pas d'éliminer l'influence de particules allongées s'étendant parallèlement et à proximité de la surface de l'objet à mesurer.

L'invention a pour objet un procédé qui supprime cet inconvénient et permet de s'affranchir totalement de l'influence d'objets parasites ou aspérités quelconques à la surface d'un corps dont on veut mesurer une dimension transversale.

Elle a encore pour objet un procédé permettant de mesurer plusieurs dimensions dans une même direction sur une section transversale présentant des discontinuités de surface, par exemple des évidements intérieurs.

Le procédé suivant l'invention consiste à effectuer un balayage à vitesse constante de la section transversale d'un corps dont on veut mesurer au moins une dimension transversale suivant au moins une direction prédéterminée, par un faisceau laser qui se déplace dans le plan de ladite section en restant perpendiculaire à ladite direction et à mesurer au moins un temps d'interruption ou de désoccultation dudit faisceau par le corps, par détection opto-électronique de la présence ou de l'absence du faisceau aval, caractérisé, en combinaison, par la génération, de façon connue en soi, d'impulsions successives correspondant aux instants de disparition et de réapparition du faisceau aval, par la génération d'une fenêtre électronique pendant chacun des intervalles de temps qui séparent, soit la disparition du faisceau aval de sa réapparition lorsqu'il s'agit de mesurer la dimension d'une zone pleine de la section, soit la présence du faisceau aval de sa disparition lorsqu'il s'agit de mesurer la dimension d'une zone vide, et par un comptage d'impulsions d'horloge pendant chacune desdites fenêtres.

Ce procédé est caractérisé en ce qu'il comporte la comparaison des comptes obtenus à un seuil numérique inférieur prédéterminé pour valider la mesure correspondante.

Le réglage de ce seuil en fonction de la dimension transversale du corps à calibrer permet alors de supprimer l'influence des objets parasites parallèles à la surface de celui-ci.

L'invention a encore pour objet un dispositif pour la mise en oeuvre du procédé susvisé.

Dans un mode d'exécution préféré, le dispositif comprend, de façon connue en soi, une source laser associée à un dispositif de balayage comportant un système optique et est caractérisé en ce que ledit système optique comprend des moyens d'augmenter la largeur du faisceau de balayage dans un plan perpendiculaire au plan de balayage.

Cette dernière disposition permet de supprimer l'influence des objets parasites perpendiculaires à la surface du corps à calibrer.

D'autres particularités, ainsi que les avantages de l'invention, apparaîtront clairement à la lumière de la description ci-après.

Au dessin annexé :
La figure 1 est un schéma de principe d'un appareil conforme à un mode d'exécution préféré de l'invention ;
La figure 2 est un schéma synoptique du dispositif de traitement des signaux électriques de l'appareil ; et
La figure 3 illustre la forme d'onde desdits signaux dans le cas du calibrage d'une cigarette comportant des peluches.

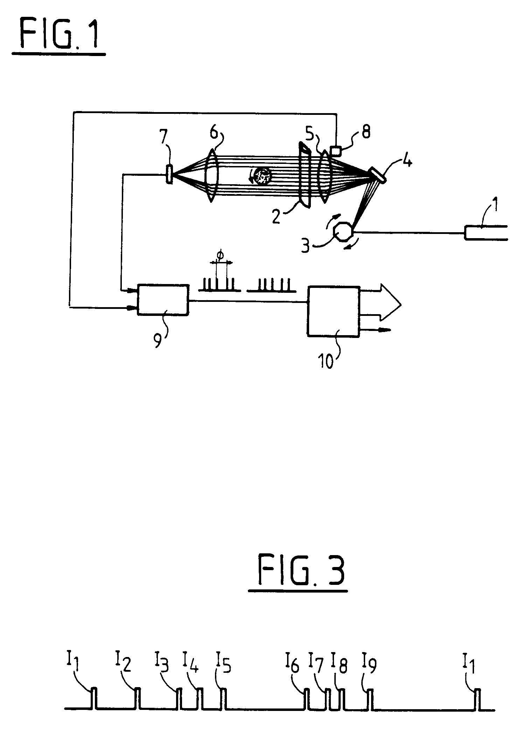

A la figure 1, on a représenté un laser 1 de faible puissance dont le faisceau est réfléchi par un miroir octogonal tournant 3 situé en amont du foyer de la lentille 2. Le faisceau tournant ainsi obtenu est successivement réfléchi par le miroir plan 4 incliné à 45° sur l'axe d'un système optique comportant deux lentilles convergentes 5 et 6, rendu parallèle audit axe par la lentille 5 et concentré sur l'axe du foyer de la lentille 6 où il est capté par un photodétecteur 7. Une lentille semi-cylindrique 2 intercalée entre l'objet et la lentille 5 permet d'élargir le faisceau.

Le miroir 3 est entraîné en rotation par exemple à la vitesse de 3000 tours/min. et l'on obtient ainsi un déplacement du faisceau utile parallèlement à l'axe, à vitesse rigoureusement constante, dans le plan de la figure.

La cigarette à calibrer est maintenue, par des moyens non figurés, dans une position perpendiculaire au plan du faisceau, et entraînée en rotation autour de son propre axe.

De préférence, les moyens de maintien et d'entraînement en rotation sont du type décrit dans le premier brevet susvisé, c'est-à-dire qu'ils comportent un support tubulaire rotatif dont l'alésage cylindrique est traversé par la cigarette, et des orifices pratiqués dans l'alésage et associés à des moyens pneumatiques d'aspiration de l'air.

La cigarette se trouve ainsi plaquée contre la paroi de l'alésage, de façon telle que l'une de ses génératrices coïncide avec une génératrice de l'alésage, sur au moins un tiers de la longueur de ce dernier.

L'appareil faisant, en général, partie d'une chaîne de dispositifs de mesures diverses dans laquelle la cigarette se déplace par gravité, elle est verticale et le plan de déplacement du faisceau est donc horizontal.

A chaque révolution de la cigarette, qui dure par exemple 2,5 sec., on effectue par exemple 512 ou 1024 mesures, dont on calcule la moyenne.

Un phototransistor 8 permet de détecter l'arrivée du faisceau au voisinage du bord supérieur de la lentille 5, et fournit, par l'intermédiaire d'un circuit électronique 9 qui génère des impulsions calibrées à chaque signal qu'il reçoit, une impulsion de synchronisation à chaque début de balayage (I₁, figure 3).

Dès l'arrivée du faisceau dans la zone utile (champ du système optique), une deuxième impulsion I₂ est générée par le circuit 9 qui reçoit un signal du photodétecteur 7. De même, des impulsions successives I₃, I₄ ... I₈ sont générées à chacune des disparitions et réapparitions successives de la portion du faisceau située en aval de la cigarette. L'impulsion I₉ correspond à la fin de la zone utile.

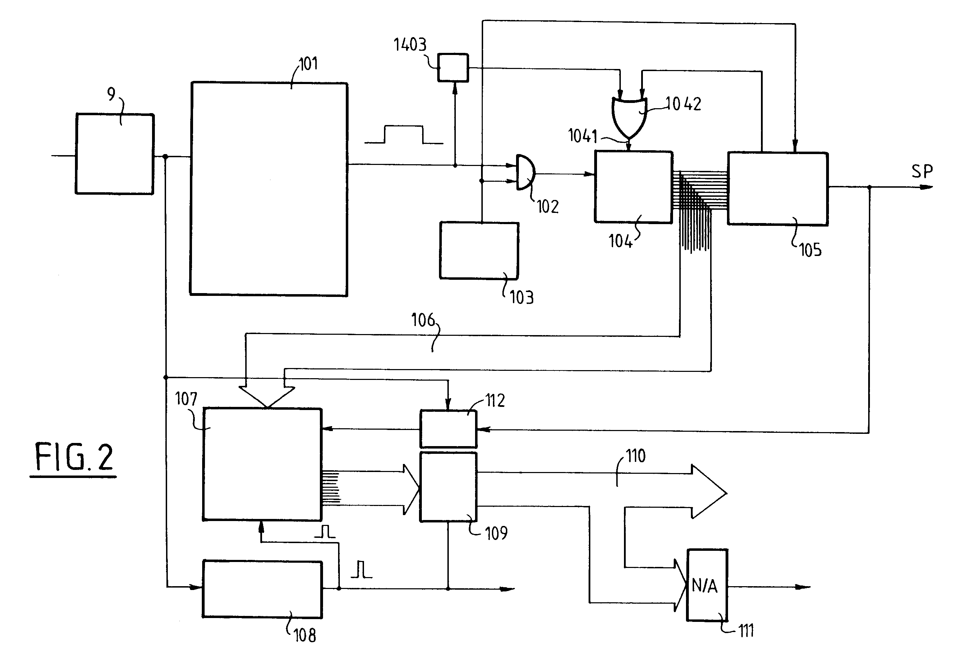

Ces impulsions sont appliquées à un circuit électronique 10 que l'on va maintenant décrire en se référant à la figure 2.

La sortie du circuit 9 est reliée à un générateur 101 d'une fenêtre électronique, qui débloque une porte ET 102, laquelle transmet à un compteur 104 une fréquence de 24 MHz générée par une horloge 103. Ces fenêtres sont générées, dans l'application à la mesure de la dimension de zones pleines, entre chacune des impulsions de rang impair et l'impulsion de rang pair suivante.

Le compte du compteur est comparé à un seuil numérique dans un comparateur 105 et un signal de présence d'une cigarette est transmis à la sortie de mesure SP lorsque le compte est supérieur au seuil.

Dans le cas contraire, le comparateur envoie un signal de remise à zéro à l'entrée 1041 du compteur, par l'intermédiaire d'une porte OU 1042. Cette dernière reçoit par ailleurs un signal de remise à zéro à la fin de chaque fenêtre, un circuit 1403 détectant le front descendant de cette dernière.

Le compte du compteur est transmis par un bus de 12 bits 106 à un dispositif de calcul de moyenne 107 validé par le signal SP et remis à zéro par une impulsion appliquée à son entrée chaque fois qu'un compteur 108 du nombre des balayages (impulsion I₁ transmise par le circuit 9) atteint un compte prédéterminé (par exemple 1, 512 ou 1024).

La valeur moyenne calculée par le dispositif 106 est appliquée, via un ensemble 109 de bascules D validé au bout dudit nombre de balayages, d'une part à une sortie du bus 110 qui indique le diamètre moyen en valeur numérique sur 12 bits, d'autre part à un convertisseur numérique/analogique 111 qui indique le diamètre moyen en valeur analogique.

La forme d'onde de la figure 3 correspond au cas où le faisceau est intercepté par une peluche axiale (parallèle à l'axe de la cigarette) avant d'être intercepté par celle-ci, puis par une seconde peluche également axiale.

Les impulsions I₃ I₄ et I₇ I₈ correspondent à ces deux interceptions parasites, donc à des comptes du compteur 104 très inférieurs au seuil. Le compteur est remis à zéro en I₄, tandis que son compte correspondant à l'intervalle I₅ I₆ (interception par le corps de la cigarette) est pris en compte par le dispositif 107.

On notera que l'influence de tout objet parasite interceptant le faisceau dans la partie du cycle de balayage située en aval du corps de la cigarette sera éliminée par le dispositif, même si la durée de l'interception I₇ I₈ correspondante est supérieure au seuil. En effet, dès l'apparition d'un front de validation SP au cours du cycle de balayage, un circuit logique 112 est bloqué au niveau 1 et empêche ainsi toute nouvelle validation du dispositif 107 avant le début du cycle suivant, où ledit circuit logique est remis à zéro par l'impulsion I₁.

La réalisation des différents circuits ci-dessus est à la portée de l'homme du métier.

Compte tenu du fait que deux objets parasites peuvent être très proches, la mesure en temps réel exige que la fréquence de commutation des composants du dispositif de calcul et de la logique atteigne plusieurs dizaines de MHz, ce qui conduit à utiliser des composants CMOS rapides.

Le seuil dimensionnel sera réglé, en fonction du produit à mesurer, à la valeur la plus élevée possible qui reste compatible avec la sécurité du fonctionnement. Pour les cigarettes, il sera par exemple de 2,56 mm.

Dans le cas, relativement rare, où des peluches radiales (perpendiculaires au corps de la cigarette) se présenteraient, on peut craindre, compte tenu de la finesse du faisceau laser, que celui-ci ne commence à être occulté dès qu'il atteint l'extrémité libre de la peluche, ce qui aboutirait à mesurer la somme de la longueur de celle-ci et du diamètre de la cigarette.

Grâce à l'élargissement de la section du faisceau, dans un plan perpendiculaire au plan de la figure, provoqué par la lentille 2, la peluche radiale, de section plus étroite que le faisceau dans ledit plan perpendiculaire, ne réussit plus à l'occulter suffisamment pour engendrer une impulsion de disparition et n'est donc pas prise en compte.

Le dispositif de l'invention est également apte, dans son principe, à mesurer la dimension d'une zone vide de matière, entourée de zone pleines, par exemple la largeur de la région évidée d'une lame de rasoir. Cette région évidée est disposée entre deux zones pleines entre lesquelles elle doit être correctement centrée. Ces dernières seront respectivement mesurées en utilisant les intervalles entre la première impulsion de rang impair (I₃) située dans la zone utile et l'impulsion suivante (I₄), et entre la seconde impulsion de rang impair (I₅) de la même zone et l'impulsion suivante (I₆). La largeur de la région évidée sera mesurée en utilisant l'intervalle entre la première impulsion de rang pair (I₄) située dans la zone utile et l'impulsion suivante (I₅). Le dispositif tel que représenté à la figure 2 devra évidemment être modifié pour être apte à aiguiller sur trois compteurs différents les impulsions d'horloge engendrées pendant les trois fenêtres contiguës I₃ I₄, I₄ I₅ et I₅ I₆. Un tel agencement est à la portée de l'homme du métier.

## Revendications

1. Procédé de mesure d'au moins une dimension de la section transversale d'un objet, en particulier une cigarette suivant une direction prédéterminée, comportant le balayage à vitesse constante de ladite section par un faisceau laser qui se déplace dans le plan de ladite section en restant perpendiculaire à ladite direction, la génération d'impulsions successives correspondant aux instants, détectés opto-électroniquement de disparition et de réapparition du faisceau aval, la génération, à partir de ces impulsions, d'une fenêtre électronique pendant chacun des intervalles de temps d'interception du faisceau par le corps et le comptage d'impulsions d'horloge pendant chacune desdites fenêtres,
caractérisé en ce qu'il comporte la comparaison de chacun des comptes obtenus à un seuil numérique inférieur prédéterminé pour valider la mesure correspondante.

2. Procédé selon la revendication 1,
caractérisé en ce que ledit seuil est réglable en fonction de la dimension à mesurer pour éliminer l'influence d'objets parasites parallèles à la surface de l'objet.

3. Dispositif pour la mise en oeuvre du procédé selon la revendication 1, comprenant, de façon connue en soi, une source laser (1) associée à un dispositif de balayage comportant un système optique (3-6),
caractérisé en ce que ledit système optique comprend des moyens (2) d'augmenter la largeur du faisceau de balayage dans un plan perpendiculaire au plan de balayage.

## Claims

1. Method of measuring at least one dimension of the transverse cross-section of an object, in particular a cigarette, in a predetermined direction, comprising the scanning of said cross-section at constant speed with a laser beam which is moved in the plane of said cross-section but remains perpendicular to said direction, the generation of successive pulses corresponding to the times, opto-electronically detected, at which the downstream side beam disappears and reappears, the generation of an electronic window from said pulses during each of the time intervals of interception of the beam by the body, and the counting of clock pulses during each of said windows, characterized in that it comprises the comparison of each of the counts obtained with a predetermined lower digital threshold to validate the respective measurement.

2. Method according to claim 1, characterized in that said threshold can be adjusted according to the dimension to be measured in order to eliminate the effect of foreign bodies parallel to the surface of the object.

3. Device for implementing the method according to claim 1, comprising, in a manner known per se, a laser source (1) associated with a scanning device incorporating an optical system (3-6), characterized in that said optical system comprises means (2) for increasing the width of the scanning beam in a plane perpendicular to the scanning plane.

## Patentansprüche

1. Verfahren zur Messung mindestens einer Abmessung des Querschnitts eines Gegenstands, insbesondere einer Zigarette, entlang einer vorbestimmten Richtung, das die Abtastung dieses Querschnitts mit konstanter Geschwindigkeit durch einen Laserstrahl, der sich in der Ebene dieses Querschnitts bewegt, wobei er senkrecht zu dieser Richtung bleibt, die Erzeugung von aufeinanderfolgenden Impulsen, die den Zeitpunkten des Verschwindens und Wiederauftretens des stromabwärts liegenden Strahls entsprechen, die opto-elektronisch erfaßt werden, die Erzeugung, ausgehend von diesen Impulsen, eines elektronischen Fensters während jedes der Zeitintervalle des Unterbrechens des Strahls durch den Körper und das Zählen von Taktimpulsen während jedes dieser Fenster enthält, dadurch gekennzeichnet, daß es den Vergleich jeder der erhaltenen Zählerstände mit einer vorbestimmten niedrigeren digitalen Schwelle enthält, um die entsprechende Messung zu validieren.

2. Verfahren nach Anspruch 1, dadurch gekennzeichnet, daß diese Schwelle in Abhängigkeit von der zu messenden Abmessung einstellbar ist, um den Einfluß von parasitären Gegenständen parallel zur Oberfläche des Gegenstands zu verhindern.

3. Vorrichtung zur Anwendung des Verfahrens nach Anspruch 1, die in bekannter Weise eine Laserquelle (1) enthält, die einer Abtastvorrichtung zugeordnet ist, welche ein optisches System (3-6) enthält, dadurch gekennzeichnet, daß das optische System Mittel (2) aufweist, um die Breite des Abtaststrahls in einer Ebene senkrecht zur Abtastebene zu vergrößern.
